# EUROPEAN PATENT SPECIFICATION

(11) **EP 3 009 256 B1**
(45) Date of publication and mention of the grant of the patent: **29.07.2020**
(21) Application number: 15183973.5
(22) Date of filing: 04.09.2015
(51) Int. Cl.: B29C 65/48

(54) **STRUCTURE INCLUDING A LIGHT-CURABLE ADHESIVE AND ASSOCIATED METHOD FOR ASSEMBLING AND CURING SAME**
STRUKTUR MIT EINEM LICHTHÄRTBAREN KLEBSTOFF UND ZUGEHÖRIGES VERFAHREN ZUR MONTAGE UND HÄRTUNG DAVON
STRUCTURE COMPRENANT UN ADHÉSIF DURCISSANT À LA LUMIÈRE ET PROCÉDÉ ASSOCIÉ D'ASSEMBLAGE ET DE DURCISSEMENT DE CELLE-CI

(30) Priority: 07.10.2014 US 201414508551
(43) Date of publication of application: 20.04.2016
(73) Proprietor: The Boeing Company, Chicago, IL 60606-1596 (US)
(72) Inventor: FERGUSON, Kathy L., Chicago, IL Illinois 60606 (US); WALKER, Terry R., Chicago, IL Illinois 60606 (US)
(74) Representative: Lloyd, Robin

(56) References cited:
- WO-A1-98/25065
- DE-A1- 19 604 081
- US-A1- 2005 136 210

## Description

### TECHNOLOGICAL FIELD

An example embodiment of the present disclosure relates generally to the assembly and curing of a structure and, more particularly, to the assembly and curing of a structure that includes a light-curable adhesive.

### BACKGROUND

Thermal adhesives are commonly utilized in the fabrication of various structures, such as composite structures, and in the bonding of doublers and patches to an underlying structure. In order to cure the thermal adhesive, a composite structure or a doubler or patch that is being bonded to an underlying structure must generally be subjected to substantially elevated temperatures and pressures for a period of time, such as several hours. The application of the substantially elevated temperature and pressures may be cumbersome and may increase the overall manufacturing or repair costs, while the time required to cure the thermal adhesive may slow the manufacturing or repair process.

By way of example, a composite structure may be formed of a plurality of plies. Each ply may include a plurality of fibers, such as graphite fibers or glass fibers. Each ply may be preimpregnated with a thermal adhesive or the plies may be vacuum impregnated with a thermal adhesive prior to layup of the plies. In either instance, the composite plies may be laid up one upon another and may then be cured in order to integrate the composite plies and form the resulting composite structure. In order to cure the thermal adhesive, the composite plies may be placed in a vacuum bag and the vacuum bagged assembly may, in turn, be placed in an autoclave. The autoclave may heat the composite plies and the thermal adhesive, while pressure is applied thereto via the vacuum bag. By subjecting the composite plies to the elevated temperature and pressure for a period of time, such as several hours, the thermal adhesive may be cured such that once removed from the autoclave and the vacuum bag, the resulting composite structure is integral, but at the expense of increased manufacturing costs and time.

As another example, a doubler or patch may be bonded to an underlying structure, such as a portion of an aircraft, in order to reinforce the underlying structure, affect a repair of the structure or the like. In this example embodiment, a thermal adhesive may be applied to the underlying structure and the doubler or patch may be positioned upon the adhesive. The thermal adhesive may then be cured by applying a vacuum bag directly over the repair or by applying a caul plate over the patch and applying a vacuum bag over the repair area and sealing the vacuum bag to the underlying structure, such as by using tacky tape, and then subjecting the doubler or patch to vacuum and the thermal adhesive to elevated temperatures and pressure. For example, a heat blanket may be placed over the vacuum bag covering the doubler or patch and a vacuum may be used to apply pressure to the doubler or patch to urge the doubler or patch toward the underlying structure. After having applied the elevated temperature and pressure for a period of time, such as several hours, the thermal adhesive may have been cured such that the pressure may be eliminated and the thermal blanket may be removed to uncover the doubler or patch bonded to the underlying structure, albeit again at the expense of increased repair costs and time

Document US2005/0136210 describes a method of curing using an electroluminescent light. Document WO98/25065 describes an apparatus with a micro engineered structure composed of at least one substrate in which flow channels are formed connecting to an aperture into which a tube is inserted. A sealant material is flowed into the aperture around the tube and then hardened.

Document DE19604081 describes a process for the joining components of a motor vehicle by a method in which at least one glass fibre is inserted in an adhesive bead.

### BRIEF SUMMARY

According to a first aspect of the disclosure, a structure at least partially adhered by a light-curable adhesive is provided, the structure comprising: first and second structural components disposed in a facing relationship; the light-curable adhesive impregnated within at least one of the first and second structural components or disposed between the first and second structural components; and one or more side-emitting light guiding members positioned between the first and second structural components and in communication with the light-curable adhesive, wherein the one or more side-emitting light guiding members are configured to emit light along a length of the one or more side-emitting light guiding members when a light source is optically coupled to an end of the light guiding members and the first and second structural components are comprised of composite material comprising fibers impregnated with the light-curable adhesive; the structure comprising a plurality of composite plies wherein the light guiding members are inserted between some of the pairs of plies, but not all pairs of plies, the plies including transparent fibers that facilitate the propagation of the light therethrough. According to a second aspect of the disclosure, the method for assembling a structure is provided, the method comprising: associating a light-curable adhesive with at least one of a first structural component or a second structural component by impregnating a composite material comprising fibers that comprises the at least one of the first or second structural components with the light-curable adhesive or disposing the light-curable adhesive upon the at least one of the first or second structural components; associating one or more side-emitting light guiding members with at least one of the first structural component or the second structural component, wherein the one or more side-emitting light guiding members are configured to emit light along a length of the one or more side-emitting light guiding members when a light source is optically coupled to an end of the light guiding members; and positioning the second structural component upon the first structural component such that the first and second structural components are disposed in a facing relationship and the one or more side-emitting light guiding members are in communication with the light-curable adhesive.

In order to cure the light-curable adhesive, the structure includes one or more side-emitting light guiding members. By utilizing a light-curable adhesive exposed to light along the length of one or more side-emitting light guiding members, the structure may be formed or repaired in a more efficient manner, such as by eliminating the need for elevated temperatures and reducing the need for elevated pressures for substantial periods of time.

In an example embodiment, a structure is provided that is at least partially adhered by a light-curable adhesive. The structure of this example embodiment includes first and second structural components disposed in a facing relationship. The structure also includes a light-curable adhesive impregnated within at least one of the first and second structural components disposed between the first and second structural components. The structure of this example embodiment further includes one or more side-emitting light guiding members positioned between the first and second structural components and in communication with the light-curable adhesive. The one or more side-emitting light guiding members are configured to emit light along a length of the one or more side-emitting light guiding members.

The second structural component of an example embodiment may include a doubler or a patch. In an alternative embodiment, the first and second structural components are formed of a composite material that includes fibers impregnanted with the light-curable adhesive. The one or more light guiding members may include a plurality of side-emitting optical fibers which may, in turn, be configured as a fiber optic mesh. The light-curable adhesive may include an ultraviolet curable adhesive. In this example embodiment, at least one of the first and second structural components may include a composite material including a plurality of fibers that are not transparent to ultraviolet light.

The structure of an example embodiment also includes a third structural component disposed in a facing relationship to the second structural component such that the second structural component is disposed between the first and third structural components. The structure of this example embodiment further includes a light-curable adhesive impregnated within at least one of the second and third structural components or disposed between the second and third structural components. Further, the structure of this example embodiment includes one or more side-emitting light guiding members positioned between the second and third structural components and in communication with the light-curable adhesive. As before, the one or more side-emitting light guiding members are configured to emit light along the length of one or more side-emitting light guiding members.

In another example embodiment, a method according to claim 7 for assembling a structure is provided that includes associating a light-curable adhesive with at least one of a first structural component or a second structural component by impregnating at least one of the first and second structural components with the light-curable adhesive or disposing the light-curable adhesive upon at least one of the first and second structural components. The method of this example embodiment also includes associating one or more side-emitting light guiding members, such as a plurality of side-emitting optical fibers, with at least one of the first structural component or the second structural component. The one or more side-emitting light guiding members are configured to emit light along a length of the one or more side-emitting light guiding members. In this example embodiment, the method also includes positioning the second structural component upon the first structural component such that the first and second structural components are disposed in a facing relationship and the one or more side-emitting light guiding members are in communication with the light-curable adhesive.

The method of an example embodiment may associate one or more side-emitting light guiding members with at least one of the first structural component or the second structural component by disposing the one or more side-emitting light guiding members upon the first structural component so as to be positioned between the first and second structural components following positioning of the second structural component upon the first structural component. In an example embodiment, the method may position the second structural component upon the first structural component by positioning a doubler or a patch upon the first structural component. In an alternative embodiment, the method may associate the light-curable adhesive with at least one of the first structural component or the second structural component by impregnating a composite material having fibers that forms at least one of the first or second structural components with the light-curable adhesive.

The method of an example embodiment may associate the light-curable adhesive with at least one of the first structural component or the second structural component by associating an ultraviolet curable adhesive with at least one of the first structural component or the second structural component. In this example embodiment, at least one of the first and second structural components may include a composite material having a plurality of fibers that are not transparent to ultraviolet light.

The method of an example embodiment also includes associating the light-curable adhesive with at least one of the second structural component or a third structural component by impregnating the at least one of the second or third structural components with the light-curable adhesive or disposing the light-curable adhesive upon the at least one of the second or third structural components. The method of this example embodiment also associates one or more side-emitting light guiding members with at least one of the second structural component or the third structural component. The one or more side-emitting light guiding members are configured to emit light along a length of the one or more side-emitting light guiding members. The method of this example embodiment further includes positioning the third structural component upon the second structural component such that the second and third structural components are disposed in a facing relationship and the one or more side-emitting light guiding members are in communication with the light-curable adhesive.

In a further example embodiment, a method is provided for curing a light-curable adhesive within a structure. The method of this example embodiment includes causing light to propagate through one or more side-emitting light guiding members and to be emitted along a length of the one or more side-emitting light guiding members. The one or more side-emitting light guiding members are positioned between first and second structural components that are disposed in a facing relationship. The method of this example embodiment further includes maintaining the light propagation through the side-emitting light guiding members so as to cure the light-curable adhesive impregnated within at least one of the first or second structural components or disposed between the first and second structural components with the light emitted along the length of the one or more side-emitting light guiding members.

The method of an example embodiment may also include placing a light source in communication with the one or more side-emitting light guiding members. In this example embodiment, the method may cause light to propagate through the one or more side-emitting light guiding members by providing light from the light source to the one or more side-emitting light guiding members for propagation therethrough. Further, the method of this example embodiment may provide light from the light source by providing ultraviolet light from the light source, such as in an instance in which the light-curable adhesive includes an ultraviolet-curable adhesive. In this embodiment, at least one of the first and second structural components includes a composite material having a plurality of fibers that are not transparent to ultraviolet light.

The method of an example embodiment may maintain the light propagation through the side-emitting light guiding members by maintaining the light propagation through the side-emitting light guiding members so as to cure the light-curable adhesive outside of an autoclave and without a vacuum bag. The method of an example embodiment may also cease propagation of light through the one or more side-emitting light guiding members following curing of the light-curable adhesive. In this example embodiment, the one or more side-emitting light guiding members may remain within the structure following curing of the light-curable adhesive.

### BRIEF DESCRIPTION OF THE DRAWINGS

Having thus described aspects of the present disclosure in general terms, reference will now be made to the accompanying drawings, which are not necessarily drawn to scale, and wherein:
Figure 1 is a perspective view of a patch or doubler being adhered to a structure with light-curable adhesive in accordance with an example embodiment of the present disclosure;
Figure 2 is a side view of the patch or doubler following its placement upon the structure and depicting the side-emitting light guiding members that deliver the light to cure the light-curable adhesive in accordance with an example embodiment of the present disclosure;
Figure 3 is a plan view of a fiber optic mesh for delivering light to a light-curable adhesive in accordance with an example embodiment of the present disclosure;
Figure 4 is a side view of a composite structure including a plurality of composite plies that have side-emitting light guiding members positioned between the plies to deliver light to cure light-curable adhesive in accordance with an example embodiment of the present disclosure;

### DETAILED DESCRIPTION

The present disclosure now will be described more fully hereinafter with reference to the accompanying drawings, in which some, but not all aspects are shown. Indeed, the disclosure may be embodied in many different forms and should not be construed as limited to the aspects set forth herein. Rather, these aspects are provided so that this disclosure will satisfy applicable legal requirements. Like numbers refer to like elements throughout.

Methods are provided in accordance with an example embodiment for assembling and curing a structure that includes a light-curable adhesive. In this regard, the light-curable adhesive may be cured by light distributed by one or more side-emitting light guiding members. By utilizing a light-curable adhesive and by delivering the light utilizing side-emitting light guiding member(s), a structure may be assembled and cured in an efficient manner without the need for an autoclave, double vacuum debulk (DVD), vacuum bagging or the like. In addition to the methods for assembling and curing a structure, a resulting structure that includes a light-curable adhesive and one or more side-emitting light guiding members is also provided in accordance with an example embodiment of the present disclosure.

The structure that includes a light-curable adhesive may be of any of a variety of different types including structures designed for different applications, such as aircraft, an automobile or other vehicles, armor, etc. and structures fabricated of different materials. Regardless of the type, the structure generally includes first and second structural components disposed in a facing relationship, such as by positioning the second structural component upon the first structural component such that the first and second structural components are aligned and adjacent.

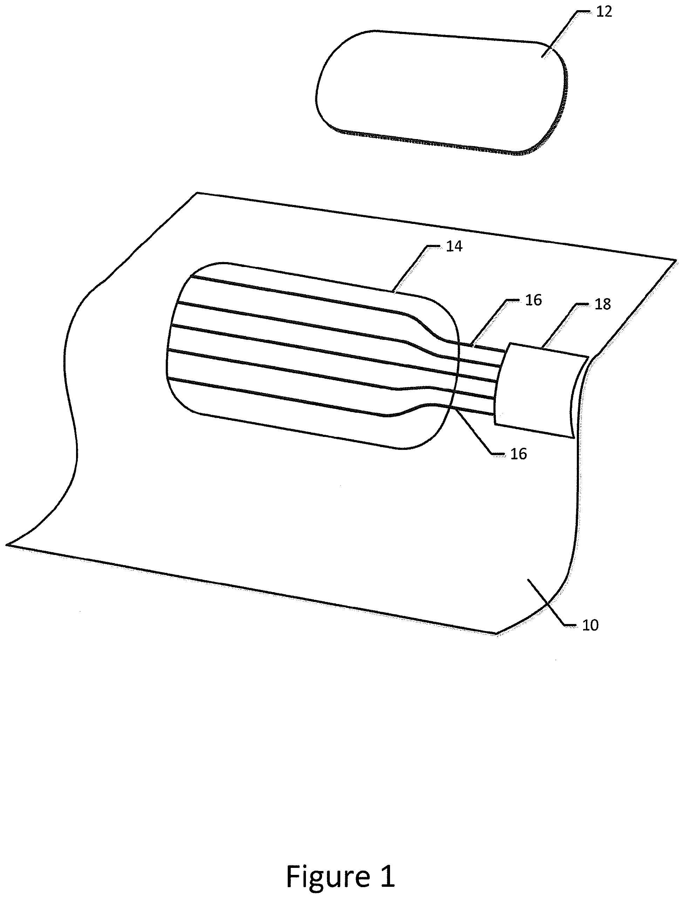

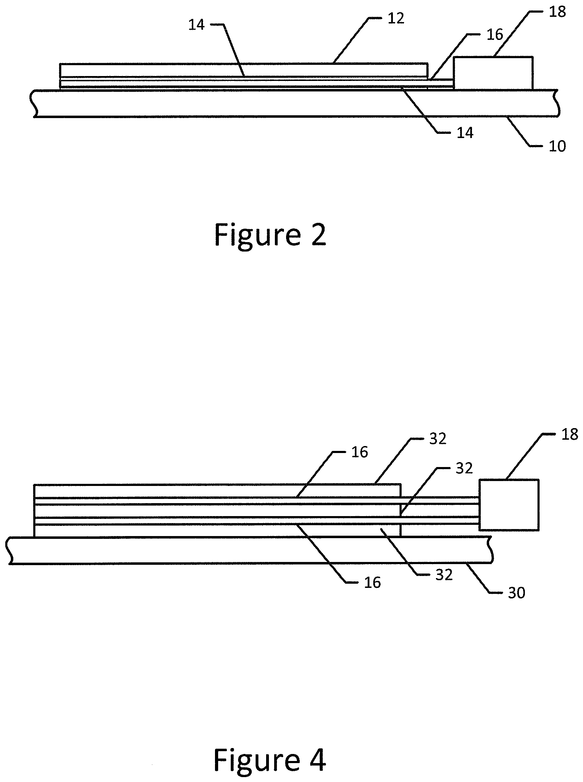

By way of example, the first structural component may comprise the skin of an aircraft, an automobile, body worn armor, vehicle armor or the like. Although the first structural component may be formed of various materials, the first structural component of this example embodiment may be formed of a graphite composite material, a fiberglass composite material, a metal material, a ceramic material, a plastic material, a Kevlar® aramid material or the like. In an instance in which a portion of the first structural component 10 is to be reinforced or in an instance in which a portion of the first structural component has a defect, the second structural component, such as a doubler or a patch 12, may be bonded to the portion of the first structural component. See Figure 1 in which the doubler or patch is removed from the first structural component for purposes of illustration as well as Figure 2 which depicts a side view of the structure following placement of the doubler or the patch upon the first structural component. In this example embodiment, the doubler or a patch may also be formed of any of a variety of materials including a graphite composite material, a fiberglass composite material, a metal material, a ceramic material, a plastic material, Kevlar® aramid material or the like. While the first and second structural components may be formed of the same material, the first and second structural components may, instead, be formed of different materials in some embodiments. Additionally, while a rounded doubler or a rounded patch is depicted in the example embodiment of Figure 1, the doubler or a patch may be of any size or shape.

The structure of an example embodiment also includes a light-curable adhesive 14 that is associated with at least one of the first structural component 10 or the second structural component 12. For example, the light-curable adhesive may be impregnated within at least one of the first or second structural components or disposed between the first and second structural components. In the example embodiment in which a doubler or a patch is bonded to the first structural component as shown in Figures 1 and 2, the light-curable adhesive may be disposed upon one or both of the facing surfaces of the first structural component or the doubler or patch so as to be positioned between the first structural component and the doubler or the patch once the doubler or the patch is bonded to the first structural component.

In an example embodiment, the light-curable adhesive 14 is an ultraviolet-curable adhesive that cures in response to exposure to ultraviolet light. For example, the ultraviolet-curable adhesive may be a Multi-Cure® 6-621 Series adhesive provided by Dymax® Corporation of Torrington, Connecticut.

In an instance in which the light-curable adhesive 14 is disposed between the first and second structural components 10, 12 as shown, for example, in Figure 2, the light-curable adhesive may be applied in various manners. For example, the light-curable adhesive may be applied as a liquid or paste to one or both of the first and second structural components. Alternatively, the light-curable adhesive may be provided as a film, such as in sheet form. In this regard, a sheet of light-curable adhesive may include a non-stick light-proof, e.g., ultraviolet-proof, backing on one or both of its opposed faces and be manufactured in rolls of variable width. Alternatively, a scrim cloth may be impregnated with a light-curable adhesive having a non-stick light-proof backing on one or both of its surfaces and manufactured as a roll of variable width. This may also be referred to as a film adhesive. In this regard, a scrim cloth is generally a relatively thin carrier, such as a carrier having a thickness of about 0.0005 inches and formed of fiberglass, spun polyester, e.g., remay, or the like. By utilizing a scrim cloth, the bondline thickness may be further controlled and a solid film of light-curable adhesive may be more easily applied relative to the application of a liquid or paste adhesive.

The structure of an example embodiment also includes one or more light guiding members 16 positioned between the first and second structural components 10, 12 and in communication, that is, optical communication, with the light-curable adhesive 14. As shown in Figures 1 and 2, one or more light guiding members may be disposed upon or within the light-curable adhesive that is positioned between the first and second structural members. In accordance with an example embodiment of the present disclosure, the light guiding members are configured to emit light from side surfaces thereof along the length of the one or more light guiding members.

The structure may include various types of light guiding members 16. For example, the light guiding members may include one or more side-emitting optical fibers, such as a fiber optic mesh in which the optical fibers are side-emitting. Although, the light guiding members may have various cross-sectional shapes, the side-emitting light guiding members of an example embodiment are cylindrical with a relatively small radius and a relatively long length. The side-emitting light guiding members of this example embodiment are circular in cross-section. The light guiding members may be formed of a variety of different types of materials, such as a plastic, a glass or various nanomaterials configured to guide light. In embodiments in which the light-curable adhesive is an ultraviolet curable adhesive, the light guiding members may be configured to guide ultraviolet light. Alternatively, the light-curable adhesive of other embodiments may be cured by light of other wavelengths, such as adhesives cured by white light or by the light emitted by light emitting diodes (LEDs),
such that the light guiding members may correspondingly be configured to guide light of the other wavelengths.

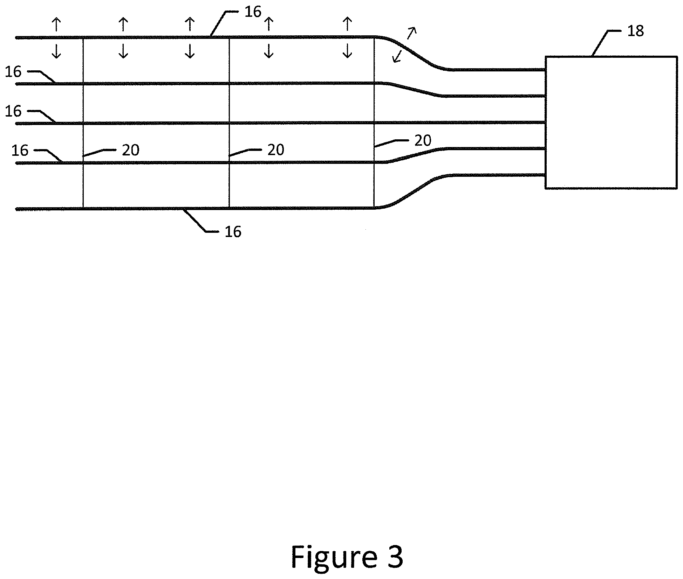

The side-emitting light guiding members emit light along their length and not only at an end thereof. With respect to cylindrically-shaped side-emitting light guiding members, the light guiding members emit light through their side surface, such as by emitting light in every direction about the circumference of the light guiding members. By emitting light from the side surfaces of the light guiding members 16, a greater extent of the light-curable adhesive 14 may be exposed in a more uniform manner to the light emitted by the light guiding members than in instances in which light is only emitted from the end of an optical fiber. As a result of the emission along the sides of the light guiding members, the adhesive that extends along the length of the light guiding member, as opposed to only the adhesive at the end of the light guiding member, may be exposed to the light such that the adhesive is exposed to the light in a more uniform manner. The number and distribution of the light guiding members may be selected such that the adhesive is relatively uniformly exposed to light emitted by the light guiding members. In this regard, a fiber optic mesh may serve as the light guiding members. As shown in Figure 3, for example, the fiber optic mesh may include a plurality of side emitting optical fibers that extend in parallel across the adhesive and are spaced uniformly relative to one another. The fiber optic mesh may include a plurality of side-emitting optical fibers laterally spaced apart from one another. In the illustrated embodiment, the fiber optic mesh may include one or more connectors 20, such as string or cords, that limit the separation between the optical fibers. The fiber optic mesh may have other configurations in other embodiments, such as configurations in which the optical fibers are disposed in a spiral configuration, are woven or the like. Although the side-emitting optical fibers of the fiber optic mesh of Figure 3 are shown to extend in parallel, the side-emitting optical fibers need not be parallel, but may extend in various different directions relative to one another in order to expose the adhesive to the light emitted from the side surfaces thereof, such as in a relatively uniform manner.

As shown in Figure 1, a light source 18 may be communicably connected to the light guiding members 16 in order to introduce light into the light guiding members and to cause light to propagate therethrough. The light source is optically coupled to one end of the light guiding members for injecting light in parallel through each of the light guiding members. As shown by way of example with respect to the uppermost optical fiber in the fiber optic mesh of Figure 3, the light then propagates along the length of the optical fiber and is emitted along the length of the optical fiber through the side surfaces so as to illuminate the light-curable adhesive 14 therealong. In an instance in which the light-curable adhesive is an ultraviolet-curable adhesive, the light source may be an ultraviolet light source. In order to increase the efficiency with which the light provided by the light source is emitted through the side surfaces of the light guiding members, the ends of the light guiding members opposite the light source may be formed by a reflective surface such that light reaching the opposed ends may be reflected and returned through the respective light guiding members. Alternatively, a second light source may be communicably coupled to the opposite ends of the light guiding members such that light is introduced through the opposed ends of the light guiding members.

As a result of the emission of the light through side surfaces of the light guiding members 16, the light-curable adhesive 14 may be cured. In this regard, the light-curable adhesive may be cured without otherwise heating the structure such the structure need not be placed in an autoclave. Additionally, while some pressure may be applied to the first and second structural components 10, 12 to urge the first and second structural components together, the structure need not be vacuum bagged, thereby further simplifying the curing process. Further, the light-curable adhesive may be cured relatively quickly relative to at least some thermal adhesives, such as by being cured within 30 minutes or less, so as to further increase the efficiency of the curing process. In some embodiments, the adhesive is cured upon a brief exposure to light, such as by being cured in less than 10 seconds, such as by being cured upon the exposure to light, such as light having a high intensity, for 2-4 seconds. In these embodiments, the side-emitting light guiding members may be damaged by the transmission of the light, such as light having a high intensity, therethrough, but light sufficient to cure the adhesive may be emitted by the side-emitting light guiding members prior to being damaged.

Although a structure that includes a doubler or a patch 12 bonded to an underlying structural component 10 has been described, the structure may be comprised of other types of structural components. According to an aspect of the present disclosure, the structure comprises of a plurality of composite plies, for example composite plies 32 as shown in Figure 4. Each composite ply may include a plurality of fibers, such as graphite fibers, glass fibers or the like. In this example embodiment, the composite plies may be impregnated with the light-curable adhesive. In this regard, the composite ply may be preimpregnated with the light-curable adhesive so as to be supplied in the form of a prepreg that includes both the fibers and the adhesive. Alternatively, the composite plies may be vacuum impregnated with the light-curable adhesive prior to layup. Still further, the ply may be subjected to resin infusion in which the resin is applied following the layup of the fibers.

In some examples, the one or more light guiding members 16 are positioned between each of the adjacent or neighboring composite plies 32. The light guiding members may be optically coupled to a light source 18 and may be configured to emit light from the side surfaces thereof such that the light-curable adhesive impregnated within the composite plies may be readily cured in a uniform manner. As the structure is not dependent upon the fibers of the first and second structural components, e.g., the composite plies, being transmissive to the light that serves to cure the adhesive, the fibers, such as black carbon fibers, need not be transparent to light and, in one example embodiment, need not be transparent to ultraviolet light. As composite materials utilizing transparent fibers may not have sufficient strength and toughness for all applications, composite materials having opaque fibers, that is, fibers not transparent to light, may include adhesive that is cured by the light emitted by side-emitting light guiding members in accordance with an example embodiment of the present disclosure.

Although the light guiding members 16, such as a fiber optic mesh, may be inserted between each pair of plies 32 in some examples according to an aspect of the present disclosure, the fiber optic mesh is, instead, inserted between some of the pairs of plies, but not all of the pairs of plies, according to the present disclosure in which the plies include transparent fibers that facilitate the propagation of the light therethrough. For example, light guiding members, such as a fiber optic mesh, may be inserted between every second or every third ply. The spacing of the light guiding members may be governed by the distance through the plies that the light emitted by the side surfaces of the light guiding members will propagate with the light guiding members being spaced by a distance that still permits all of the adhesive in all of the plies, including those plies not immediately adjacent the light guiding members, to be exposed to light and cured. As the adhesive is cured with light emitted by side surfaces of light guiding members disposed with the structure, the entire or a significant portion of the structure may be assembled prior to curing, thereby further increasing the efficiency by reducing the need for multiple cure cycles relative to other techniques that are limited to curing two or three plies at any one time.

While two different types of structures have been described by way of example, a variety of other structures may be formed utilizing a light-curable adhesive 14 and one or more side-emitting light guiding members 16 for delivering the light to cure the light-curable adhesive. For example, structures formed of composite materials in which the one or more light guiding members 16 are woven into the composite plies may be provided in accordance with an example embodiment of the present disclosure.

A, a method is provided in accordance with an example embodiment in order to assemble a structure that is adhered by a light-curable adhesive 14. In this method, a light-curable adhesive, such as an ultraviolet-curable adhesive, may be associated with at least one of a first structural component 10 or a second structural component 12. In this regard, the light-curable adhesive may be associated with the first and/or second structural components by impregnating at least one of the first or second structural components with the light-curable adhesive or by disposing the light-curable adhesive on at least one of the first or second structural components so as to be disposed between the first and second structural components. As described above in conjunction with Figures 1 and 2, for example, the light-curable adhesive may be disposed upon a first structural component so as to be sandwiched between the first and second structural components. Alternatively, the light-curable adhesive may be associated with the first and second structural components by impregnating a composite material that forms the first and second structural components with the light-curable adhesive.

The method for assembling a structure may also associate one or more light guiding members 16, such as a plurality of side-emitting optical fibers, with at least one of the first structural component 10 or the second structural component 12. For example, the one or more light guiding members may be disposed upon the first structural component. The one or more light guiding members may be configured to emit light from side surfaces thereof along the length of the one or more light guiding members. An embodiment may also include positioning a second structural component 12 upon the first structural component such that the first and second structural components are disposed in a facing relationship and the one or more light guiding members are in communication with the light-curable adhesive 14. The second structural component that is positioned upon the first structural component may be a composite ply, a doubler, a patch or the like. In an instance in which the one or more light guiding members are disposed upon the first structural component, .the positioning of the second structural component upon the first structural component causes the one or more light guiding members to thereafter be disposed between the first and second structural components.

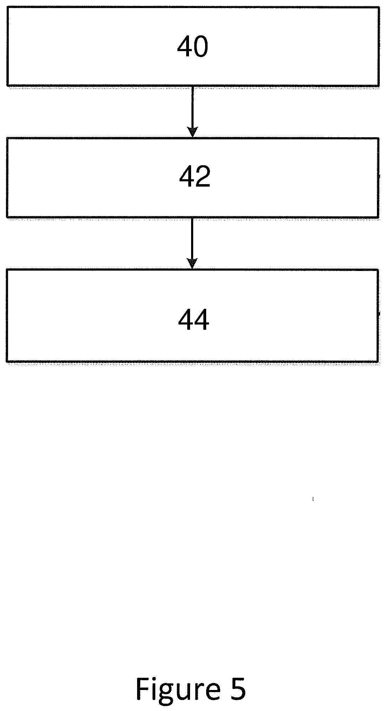

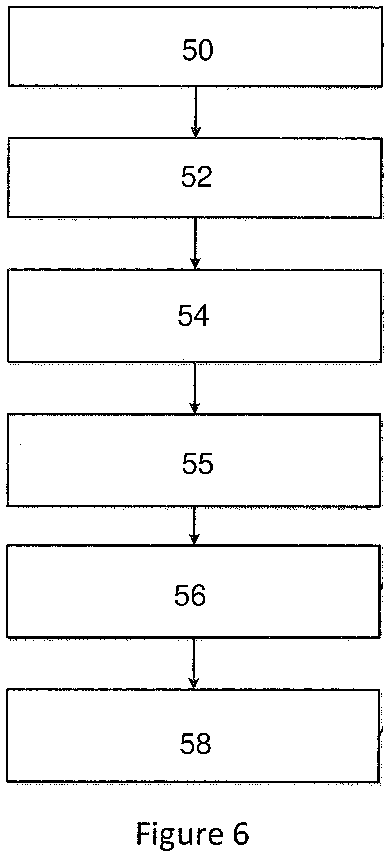

As per Figure 5, a method for assembling a structure that is adhered by a light-curable adhesive 14 is shown. This includes associating a light-curable adhesive with at least a first structural component or a second structural component (block 40); associating side-emitting light guiding member(s) with the first or second structural components (block 42); and positioning the second structural component upon the first structural component in a facing relationship thereto (block 44). Following the assembly of the structure, a method for curing the light-curable adhesive 14 within the structure may be provided that includes first and second structural components 10, 12 disposed in a facing relationship, the light-curable adhesive impregnated within at least one of the first and second structural components or disposed between the first and second structural components and one or more light guiding members 16 positioned between the first and second structural components. A light source 18 may be placed in communication with the one or more light guiding members, such as by being optically connected to one end of the light guiding members. Thereafter, light may be caused to propagate through the one or more side-emitting light guiding members and to be emitted from side surfaces along the length of the one or morelight guiding members as shown and by the uppermost optical fiber in Figure 3. While light propagates through the one or more side-emitting light guiding members and is emitted from side surfaces along the length of the one or more light guiding members, pressure may be applied to the first and second structural components to urge the first and second structural components together. See block 55 of Figure 6. As shown in block 56, the light propagation through the side-emitting light guiding members is maintained until the light-curable adhesive is cured a result of the exposure of the light-curable adhesive to the light emitted from the side surfaces of the light guiding members. Once the light-curable adhesive has been cured, the propagation of the light through the one or more light guiding members may be ceased. See block 58. However, the one or more light guiding members remain within the structure following the curing of the light-curable adhesive, such as during the subsequent deployment of the structure.

By utilizing a light-curable adhesive 14 exposed to light emitted by the side surfaces of one or more light guiding members 16, the structure may be formed or repaired in a more efficient manner, such as by reducing the need for elevated temperatures and pressures for substantial periods of time. In this regard, the structure of an example embodiment may be formed without use of an autoclave and without vacuum bagging, thereby simplifying and streamlining the manufacturing or repair process.

As shown in Figure 6, a method for curing the light-curable adhesive 14 within the structure is shown. This includes providing a structure having first and second structural components, a light-curable adhesive and side-emitting light guiding member(s) (block 50); placing a light source in communication with the side-emitting light guiding member(s) (block 52); causing light to propagate through the side-emitting light guiding members(s) and to be emitted along a length thereof (block 54); applying pressure to the first and second structural components to urge the first and second structural components together (block 55); maintaining the light propagation through the side-emitting light guiding member(s) so as to cure the light curable adhesive (block 56); and ceasing propagation of the light through the side-emitting light guiding member(s) following curing of the adhesive (block 58).

## Claims

1. A structure at least partially adhered by a light-curable adhesive (14), the structure comprising:
first and second structural components (10, 12) disposed in a facing relationship;
the light-curable adhesive (14) impregnated within at least one of the first and second structural components (10, 12) or disposed between the first and second structural components (10, 12); and
one or more side-emitting light guiding members positioned between the first and second structural components (10, 12) and in communication with the light-curable adhesive (14), wherein the one or more side-emitting light guiding members (16) are configured to emit light along a length of the one or more side-emitting light guiding members (16) when a light source is optically coupled to an end of the light guiding members (16) and the first and second structural components (10, 12) are comprised of composite material comprising fibers impregnated with the light-curable adhesive (14); and
the structure comprising a plurality of composite plies (32) wherein the light guiding members (16) are inserted between some of the pairs of plies, but not all pairs of plies, the plies including transparent fibers that facilitate the propagation of the light therethrough.

2. A structure according to Claim 1 wherein the second structural component (12) comprises a doubler or a patch.

3. A structure according to any one of the preceding Claims further comprising:
a third structural component (32) disposed in a facing relationship to the second structural component (12) such that the second structural component (12) is disposed between the first and third (10, 32) structural components;
light-curable adhesive (14) impregnated within at least one of the second and third structural components (12, 32) or disposed between the second and third structural components (12, 32); and
the one or more side-emitting light guiding members (16) positioned between the second and third structural components (12, 16) and in communication with the light-curable adhesive (14), wherein the one or more side-emitting light guiding members (16) configured to emit light along a length of the one or more side-emitting light guiding members (16).

4. A structure according to any one of the preceding Claims wherein the one or more light guiding members (16) comprise a fiber optic mesh.

5. A structure according to any one of the preceding Claims wherein light-curable adhesive (14) comprises an ultraviolet curable adhesive.

6. A structure according to Claim 5 wherein at least one of the first and second structural components (10, 12) comprises a composite material comprising a plurality of fibers that are not transparent to ultraviolet light.

7. A method for assembling a structure comprising a plurality of composite plies (32), the method comprising:
associating a light-curable adhesive (14) with at least one of a first structural component (10) or a second structural component (12) by impregnating a composite material comprising fibers that comprises the at least one of the first or second structural components (10, 12) with the light-curable adhesive (14) or disposing the light-curable adhesive (14) upon the at least one of the first or second structural components (10, 12);
associating one or more side-emitting light guiding members (16) with at least one of the first structural component (10) or the second structural component (12), wherein the one or more side-emitting light guiding members (16) are configured to emit light along a length of the one or more side-emitting light guiding members (16) when a light source is optically coupled to an end of the light guiding members (16); and
positioning the second structural component (12) upon the first structural component (10) such that the first and second structural components (10, 12) are disposed in a facing relationship and the one or more side-emitting light guiding members (16) are in communication with the light-curable adhesive (14); and
inserting the light guiding members (16) between some of the pairs of plies, but not all pairs of plies, the plies including transparent fibers that facilitate the propagation of the light therethrough.

8. A method according to Claim 7 wherein associating one or more side-emitting light guiding members (16) with at least one of the first structural component (10) or the second structural component (12) comprises disposing the one or more side-emitting light guiding members (16) upon the first structural component (10) so as to be positioned between the first and second structural components (10, 12) following positioning of the second structural component (12) upon the first structural component (10).

9. A method according to Claim 7 or 8 wherein positioning the second structural component (12) upon the first structural component (10) comprises positioning a doubler or a patch upon the first structural component (10).

10. A method according to any one of Claims 7 to 9 further comprising:
associating the light-curable adhesive (14) with at least one of the second structural component (12) or a third structural component (32) by impregnating the at least one of the second or third structural components (12, 32) with the light-curable adhesive (14) or disposing the light-curable adhesive (14) upon the at least one of the second or third structural components (12, 32);
associating one or more side-emitting light guiding members (16) with at least one of the second structural component (12) or the third structural component (32), wherein the one or more side-emitting light guiding members (16) are configured to emit light along a length of the one or more side-emitting light guiding members (16); and
positioning the third structural component (32) upon the second structural component (12) such that the second and third structural components (12, 32) are disposed in a facing relationship and the one or more side-emitting light guiding members (16) are in communication with the light-curable adhesive (14).

11. A method according to any one of Claims 7 to 10 wherein associating the light-curable adhesive (14) with at least one of the first structural component (10) or the second structural component (12) comprises associating an ultraviolet curable adhesive with at least one of the first structural component (10) or the second structural component (12).

12. A method according to Claim 11 wherein at least one of the first and second structural components (10, 12) comprises a composite material comprising a plurality of fibers that are not transparent to ultraviolet light.

## Patentansprüche

1. Struktur, die wenigstens teilweise durch einen lichthärtbaren Klebstoff (14) geklebt wird, wobei die Struktur aufweist:
erste und zweite Strukturkomponenten (10, 12), die in einer einander zugewandten Beziehung angeordnet sind;
den lichthärtbaren Klebstoff (14), der in wenigstens einer der ersten und zweiten Strukturkomponenten (10, 12) imprägniert ist oder zwischen den ersten und zweiten Strukturkomponenten (10, 12) angeordnet ist; und
ein oder mehrere seitenemittierende lichtleitende Teile, die zwischen den ersten und zweiten Strukturkomponenten (10, 12) positioniert sind und mit dem lichthärtbaren Klebstoff (14) im Austausch sind, wobei das eine oder die mehreren seitenemittierenden lichtleitenden Teile (16) dazu konfiguriert sind, Licht entlang einer Länge des einen oder der mehreren seitenemittierenden lichtleitenden Teile (16) auszusenden, wenn eine Lichtquelle optisch mit einem Ende der lichtleitenden Teile (16) verbunden ist, und die ersten und zweiten Strukturkomponenten (10, 12) aus einem Verbundmaterial bestehen, das Fasern aufweist, die mit dem lichthärtbaren Klebstoff (14) imprägniert sind; und
wobei die Struktur eine Vielzahl von Verbundlagen (32) aufweist, wobei die lichtleitenden Teile (16) zwischen einige der Paare von Lagen, jedoch nicht alle Paare von Lagen, eingefügt sind, wobei die Lagen transparente Fasern aufweisen, die die Verbreitung des Lichts dort hindurch erleichtern.

2. Struktur nach Anspruch 1, wobei die zweite Strukturkomponente (12) einen Doppler oder einen Flicken aufweist.

3. Struktur nach einem der vorhergehenden Ansprüche, die des Weiteren aufweist:
eine dritte Strukturkomponente (32), in einer der zweiten Strukturkomponente (12) zugewandten Beziehung derart angeordnet ist, dass die zweite Strukturkomponente (12) zwischen den ersten und dritten (10, 32) Strukturkomponenten angeordnet ist;
lichthärtbaren Klebstoff (14), der in wenigstens einer der zweiten und dritten Strukturkomponenten (12, 32) imprägniert ist oder zwischen den zweiten und dritten Strukturkomponenten (12, 32) angeordnet ist; und
das eine oder die mehreren seitenemittierenden lichtleitenden Teile (16), die zwischen den zweiten und dritten Strukturkomponenten (12, 16) und im Austausch mit dem lichthärtbaren Klebstoff (14) positioniert sind, wobei das eine oder die mehreren seitenemittierenden lichtleitenden Teile (16) dazu konfiguriert sind, Licht entlang einer Länge des einen oder der mehreren seitenemittierenden lichtleitenden Teile (16) auszusenden.

4. Struktur nach einem der vorhergehenden Ansprüche, wobei das eine oder die mehreren lichtleitenden Teile (16) ein faseroptisches Gewebe aufweisen.

5. Struktur nach einem der vorhergehenden Ansprüche, wobei der lichthärtbare Klebstoff (14) einen ultraviolett härtbaren Klebstoff aufweist.

6. Struktur nach Anspruch 5, wobei wenigstens eine der ersten und zweiten Strukturkomponenten (10, 12) ein Verbundmaterial aufweist, das eine Vielzahl von Fasern aufweist, die nicht für ultraviolettes Licht durchlässig sind.

7. Verfahren zum Zusammensetzen einer Struktur, die eine Vielzahl von Verbundlagen (32) aufweist, wobei das Verfahren aufweist:
Verbinden eines lichthärtbaren Klebstoffs (14) mit wenigstens einem von einer ersten Strukturkomponente (10) oder einer zweiten Strukturkomponente (12) durch Imprägnieren eines Verbundmaterials, das Fasern aufweist, das die wenigstens eine der ersten und zweiten Strukturkomponenten (10, 12) aufweist, mit dem lichthärtbaren Klebstoff (14) oder Anbringen des lichthärtbaren Klebstoffs (14) auf der wenigstens einen der ersten oder zweiten Strukturkomponenten (10, 12);
Verbinden eines oder mehrerer seitenemittierender lichtleitender Teile (16) mit wenigstens einer der ersten Strukturkomponente (10) oder der zweiten Strukturkomponente (12), wobei das eine oder die mehreren seitenemittierenden lichtleitenden Teile (16) dazu konfiguriert sind, Licht entlang einer Länge des einen oder der mehreren seitenemittierenden lichtleitenden Teile (16) auszusenden, wenn eine Lichtquelle optisch mit einem Ende der lichtleitenden Teile (16) verbunden ist; und
Positionieren der zweiten Strukturkomponente (12) auf der ersten Strukturkomponente (10) derart, dass die ersten und zweiten Strukturkomponenten (10, 12) in einander zugewandter Beziehung angeordnet sind und das eine oder die mehreren seitenemittierenden lichtleitenden Teile (16) mit dem lichthärtbaren Klebstoff (14) im Austausch sind; und
Einfügen der lichtleitenden Teile (16) zwischen einige der Paare von Lagen, jedoch nicht alle Paare von Lagen, wobei die Lagen transparente Fasern aufweisen, die die Verbreitung von Licht dort hindurch erleichtern.

8. Verfahren nach Anspruch 7, wobei das Verbinden eines oder mehrerer seitenemittierender lichtleitender Teile (16) mit wenigstens einer der ersten Strukturkomponente (10) oder der zweiten Strukturkomponente (12) das Anordnen des einen oder der mehreren seitenemittierenden lichtleitenden Teile (16) auf der ersten Strukturkomponente (10) so aufweist, dass es zwischen den ersten und zweiten Strukturkomponenten (10, 12) positioniert ist, nach dem Positionieren der zweiten Strukturkomponente (12) auf der ersten Strukturkomponente (10).

9. Verfahren nach Anspruch 7 oder 8, wobei das Positionieren der zweiten Strukturkomponente (12) auf der ersten Strukturkomponente (10) das Positionieren eines Dopplers oder eines Flickens auf der ersten Strukturkomponente (10) aufweist.

10. Verfahren nach einem der Ansprüche 7 bis 9, das des Weiteren aufweist:
Verbinden des lichthärtbaren Klebstoffs (14) mit wenigstens einer der zweiten Strukturkomponente (12) oder einer dritten Strukturkomponente (32) durch Imprägnieren der wenigstens einen der zweiten oder dritten Strukturkomponenten (12, 32) mit dem lichthärtbaren Klebstoff (14) oder Anordnen des lichthärtbaren Klebstoffs (14) auf der wenigstens einen der zweiten oder dritten Strukturkomponenten (12, 32);
Verbinden eines oder mehrerer seitenemittierender lichtleitender Teile (16) mit wenigstens einer der zweiten Strukturkomponente (12) oder der dritten Strukturkomponente (32), wobei das eine oder die mehreren seitenemittierenden lichtleitenden Teile (16) dazu konfiguriert sind, Licht entlang einer Länge des einen oder der mehreren seitenemittierenden lichtleitenden Teile (16) auszusenden; und
Positionieren der dritten Strukturkomponente (32) auf der zweiten Strukturkomponente (12) derart, dass die zweiten und dritten Strukturkomponenten (12, 32) in einander zugewandter Beziehung angeordnet sind und das eine oder die mehreren seitenemittierenden lichtleitenden Teile (16) mit dem lichthärtbaren Klebstoff (14) im Austausch sind.

11. Verfahren nach einem der Ansprüche 7 bis 10, wobei das Verbinden des lichthärtbaren Klebstoffs (14) mit wenigstens einer der ersten Strukturkomponente (10) oder der zweiten Strukturkomponente (12) das Verbinden eines ultraviolett härtbaren Klebstoffs mit wenigstens einer der ersten Strukturkomponente (10) oder der zweiten Strukturkomponente (12) aufweist.

12. Verfahren nach Anspruch 11, wobei wenigstens eine der ersten und zweiten Strukturkomponenten (10, 12) ein Verbundmaterial aufweist, das eine Vielzahl von Fasern aufweist, die nicht für ultraviolettes Licht durchlässig sind.

## Revendications

1. Structure au moins partiellement collée par un adhésif (14) qui peut durcir à la lumière, la structure comprenant :
des premier et deuxième composants structurels (10, 12) disposés dans une relation en face-à-face ;
l'adhésif (14) qui peut durcir à la lumière, imprégné au sein d'au moins un composant parmi les premier et deuxième composants structurels (10, 12) ou disposé entre les premier et deuxième composants structurels (10, 12) ; et
un ou plusieurs éléments de guidage de lumière à émission latérale, positionnés entre les premier et deuxième composants structurels (10, 12) et en communication avec l'adhésif (14) qui peut durcir à la lumière, l'un ou plusieurs éléments (16) de guidage de lumière à émission latérale étant configurés pour émettre la lumière le long d'une longueur de l'un ou plusieurs éléments (16) de guidage de lumière à émission latérale lorsqu'une source de lumière est couplée optiquement à une extrémité des éléments (16) de guidage de lumière et les premier et deuxième composants structurels (10, 12) étant composés d'un matériau composite comprenant des fibres imprégnées de l'adhésif (14) qui peut durcir à la lumière ; et
la structure comprenant une pluralité de plis composites (32) dans laquelle les éléments (16) de guidage de lumière sont insérés entre certaines des paires de plis, mais pas toutes les paires de plis, les plis comportant des fibres transparentes qui facilitent la propagation de la lumière à travers.

2. Structure selon la revendication 1, dans laquelle le deuxième composant structurel (12) comprend une tôle de renfort ou une pièce de réparation.

3. Structure selon une quelconque des revendications précédentes, comprenant en outre :
un troisième composant structurel (32) disposé dans une relation en face-à-face avec le deuxième composant structurel (12) de telle sorte que le deuxième composant structurel (12) est disposé entre les premier et troisième composants structurels (10, 32) ;
un adhésif (14) qui peut durcir à la lumière, imprégné au sein d'au moins un composant parmi les deuxième et troisième composants structurels (12, 32) ou disposé entre les deuxième et troisième composants structurels (12, 32) ; et
l'un ou plusieurs éléments (16) de guidage de lumière à émission latérale, positionnés entre les deuxième et troisième composants structurels (12, 16) et en communication avec l'adhésif (14) qui peut durcir à la lumière, l'un ou plusieurs éléments (16) de guidage de lumière à émission latérale étant configurés pour émettre la lumière le long d'une longueur de l'un ou plusieurs éléments (16) de guidage de lumière à émission latérale.

4. Structure selon une quelconque des revendications précédentes, dans laquelle l'un ou plusieurs éléments (16) de guidage de lumière comprennent unmaillage de fibre optique.

5. Structure selon une quelconque des revendications précédentes, dans laquelle l'adhésif (14) qui peut durcir à la lumière comprend un adhésif qui peut durcir aux ultraviolets.

6. Structure selon la revendication 5, dans laquelle au moins un composant parmi les premier et deuxième composants structurels (10, 12) comprend un matériau composite comprenant une pluralité de fibres qui ne sont pas transparentes au rayonnement ultraviolet.

7. Procédé destiné à assembler une structure comprenant une pluralité de plis (32), le procédé comprenant les étapes consistant à :
associer un adhésif (14) qui peut durcir à la lumière à au moins un composant parmi un premier composant structurel (10) ou un deuxième composant structurel (12) en imprégnant un matériau composite comprenant des fibres qui comprennent l'au moins un des premier ou deuxième composants structurels (10, 12) avec l'adhésif (14) qui peut durcir à la lumière ou en disposant l'adhésif (14) qui peut durcir à la lumière sur l'au moins un des premier ou deuxième composants structurels (10, 12) ;
associer un ou plusieurs éléments (16) de guidage de lumière à émission latérale à au moins un composant parmi le premier composant structurel (10) ou le deuxième composant structurel (12), l'un ou plusieurs éléments (16) de guidage de lumière à émission latérale étant configurés pour émettre la lumière le long d'une longueur de l'un ou plusieurs éléments (16) de guidage de lumière à émission latérale lorsqu'une source de lumière est couplée optiquement à une extrémité des éléments (16) de guidage de lumière ; et
positionner le deuxième composant structurel (12) sur le premier composant structurel (10) de telle sorte que les premier et deuxième composants structurels (10, 12) sont disposés dans une relation en face-à-face et l'un ou plusieurs éléments (16) de guidage de lumière à émission latérale sont en communication avec l'adhésif (14) qui peut durcir à la lumière ; et
insérer les éléments (16) de guidage de lumière entre certaines des paires de plis, mais pas toutes les paires de plis, les plis comportant des fibres transparentes qui facilitent la propagation de la lumière à travers.

8. Procédé selon la revendication 7, dans lequel l'association d'un ou de plusieurs éléments (16) de guidage de lumière à émission latérale à au moins un composant parmi le premier composant structurel (10) ou le deuxième composant structurel (12) comprend l'étape consistant à disposer l'un ou plusieurs éléments (16) de guidage de lumière à émission latérale sur le premier composant structurel (10) de manière à être positionné entre les premier et deuxième composants structurels (10, 12) suite au positionnement du deuxième composant structurel (12) sur le premier composant structurel (10).

9. Procédé selon la revendication 7 ou 8, dans lequel le positionnement du deuxième composant structurel (12) sur le premier composant structurel (10) comprend l'étape consistant à positionner une tôle de renfort ou une pièce de réparation sur le premier composant structurel (10).

10. Procédé selon une quelconque des revendications 7 à 9, comprenant en outre les étapes consistant à :
associer l'adhésif (14) qui peut durcir à la lumière à au moins un composant parmi le deuxième composant structurel (12) ou un troisième composant structurel (32) en imprégnant l'au moins un composant parmi le deuxième ou le troisième composant structurel (12, 32) avec l'adhésif (14) qui peut durcir à la lumière ou en disposant l'adhésif (14) qui peut durcir à la lumière sur l'au moins un composant parmi le deuxième ou le troisième composant structurel (12, 32) ;
associer un ou plusieurs éléments (16) de guidage de lumière à émission latérale à au moins un composant parmi le deuxième composant structurel (12) ou le troisième composant structurel (32), l'un ou plusieurs éléments (16) de guidage de lumière à émission latérale étant configurés pour émettre la lumière le long d'une longueur de l'un ou plusieurs éléments (16) de guidage de lumière à émission latérale ; et
positionner le troisième composant structurel (32) sur le deuxième composant structurel (12) de telle sorte que les deuxième et troisième composants structurels (12, 32) sont disposés dans une relation en face-à-face et l'un ou plusieurs éléments (16) de guidage de lumière à émission latérale sont en communication avec l'adhésif (14) qui peut durcir à la lumière.

11. Procédé selon une quelconque des revendications 7 à 10, dans lequel l'association de l'adhésif (14) qui peut durcir à la lumière à au moins un composant parmi le premier composant structurel (10) ou le deuxième composant structurel (12) comprend l'étape consistant à associer un adhésif qui peut durcir aux ultraviolets à au moins un composant parmi le premier composant structurel (10) ou le deuxième composant structurel (12).

12. Procédé selon la revendication 11, dans lequel au moins un composant parmi les premier et deuxième composants structurels (10, 12) comprend un matériau composite comprenant une pluralité de fibres qui ne sont pas transparentes au rayonnement ultraviolet.
